# EUROPÄISCHE PATENTSCHRIFT

(11) **EP 2 719 555 B1**
(45) Veröffentlichungstag und Bekanntmachung des Hinweises auf die Patenterteilung: **28.11.2018**
(21) Anmeldenummer: 13004685.7
(22) Anmeldetag: 26.09.2013
(51) Int. Cl.: B60D 1/06, B60D 1/62

(54) **Anhängekupplung mit einem Sensor**
Trailer coupling with a sensor
Attelage doté d'un capteur

(30) Priorität: 09.10.2012 DE 102012019745
(43) Veröffentlichungstag der Anmeldung: 16.04.2014
(73) Patentinhaber: WESTFALIA - Automotive GmbH, 33378 Rheda-Wiedenbrück (DE)
(72) Erfinder: Sielhorst, Bernhard, 33378 Rheda-Wiedenbrück (DE); Scheips, René, 33605 Bielefeld (DE); Peitz, Jürgen, 33378 Rheda-Wiedenbrück (DE)
(74) Vertreter: Patentanwälte Bregenzer und Reule Partnerschaftsgesellschaft mbB

(56) Entgegenhaltungen:
- EP-A1- 2 332 750
- EP-A1- 2 415 620
- DE-A1-102010 003 791

## Beschreibung

Die Erfindung betrifft eine Anhängekupplung für ein Kraftfahrzeug, insbesondere ein Personen-Kraftfahrzeug, gemäß dem Oberbegriff des Anspruchs 1.

Die Erfassung einer Winkelstellung des Anhängers relativ zum Zugfahrzeug kann für vielfältige Zwecke genutzt werden, beispielsweise um ein Rückwärtseinparken des Gespanns zu erleichtern, um Maßnahmen zur Erhöhung der Fahrstabilität des Gespanns herzustellen oder dergleichen.

Eine Anhängekupplung der eingangs genannten Art ist z.B. in DE 10 2010 049 614 oder EP 2 415 620 A1 beschrieben, wobei der Mitnehmer die Gestalt eines Ringes aufweist.

Es ist daher die Aufgabe der vorliegenden Erfindung, eine Anhängekupplung ein verbessertes System zur Winkelerfassung der Zugkupplung relativ zur Anhängekupplung bereitzustellen.

Zur Lösung der Aufgabe ist eine Anhängekupplung gemäß der technischen Lehre des Anspruchs 1 vorgesehen.

Der mindestens eine Mitnahmevorsprung ist beispielsweise in sich elastisch. Beispielsweise wird er von einer Art Ausstülpung gebildet, die an einem Grundkörper des Mitnehmers vorgesehen ist. Es ist aber auch möglich, dass der mindestens eine Mitnahmevorsprung federnd und/oder elastisch an den Grundkörper gelagert ist. Beispielsweise könnte hinter dem mindestens einen Mitnahmevorsprung eine Feder oder eine Federanordnung vorgesehen sein.

Eine Variante der Erfindung kann auch vorsehen, dass der mindestens eine Mitnahmevorsprung an sich nicht elastisch ist, jedoch an einem elastischen und/oder federnden Abschnitt des Mitnehmers angeordnet ist, so dass der mindestens eine Mitnahmevorsprung in die Aufnahmekavität hinein verdrängbar ist, beispielsweise bei Beaufschlagung durch die Zugkupplung.

Eine bevorzugte Ausführungsform sieht vor, dass eine Elastizität des mindestens einen Mitnahmevorsprungs oder eine dem Mitnahmevorsprung zugeordneten Federanordnung derart ausgestaltet Vorsprung angeordnet ist, so dass der Mitnehmervorsprung unbeschädigt oder zumindest nur mit geringem Verschleiß in die Aufnahmekavität hinein verdrängt wird, wenn eine entsprechende Druckbelastung durch die Zugkupplung, beispielsweise eine Zugkupplungsaufnahme, erfolgt.

Die Aufnahmekavität weist erfindungsgemäß ein Freivolumen zur Aufnahme mindestens desjenigen Volumens des mindestens einen Mitnahmevorsprungs auf, das im unkomprimierten oder unverdrängten Zustand des Mitnehmervorsprungs vor die Lageoberfläche vorsteht. Der Mitnehmervorsprung ist also beispielsweise in dem unverdrängten Zustand nicht durch die Zugkupplung des Anhängers belastet. Diese Maßnahme ermöglicht es, dass der Mitnehmervorsprung an sich nicht komprimierbar sein muss, auch wenn das als eine zweckmäßige Maßnahme vorgesehen sein kann, sondern in der Aufnahmekavität zumindest im wesentlichen Platz findet.

Ein Zentrum des mindestens einen Mitnahmevorsprungs und ein Zentrum der zugeordneten Aufnahmekavität, die beispielsweise auch durch eine Rastaufnahme oder Hakenaufnahme gebildet sein kann, was später noch deutlich wird, sind vorzugsweise derart hintereinander angeordnet oder fluchten derart miteinander, dass das Zentrum des mindestens einen Mitnahmevorsprungs etwa mittig in die Aufnahmekavität hinein verdrängbar ist. Somit kann also der Mitnahmevorsprung dort, wo er am weitesten vor die Lageroberfläche vorsteht, einen Rückzugsraum, nämlich die Aufnahmekavität finden.

Das erfindungsgemäße Konzept ist selbstverständlich bereits bei einem einzigen Mitnahmevorsprung realisierbar. Bevorzugt sind jedoch mehrere Mitnahmevorsprünge, beispielsweise zwei Mitnahmevorsprünge, drei Mitnahmevorsprünge oder weitere Mitnahmevorsprünge am Mitnehmer vorgesehen. Es ist eine vor-Vorsprung angeordnet ist, so dass der Mitnehmervorsprung unbeschädigt oder zumindest nur mit geringem Verschleiß in die Aufnahmekavität hinein verdrängt wird, wenn eine entsprechende Druckbelastung durch die Zugkupplung, beispielsweise eine Zugkupplungsaufnahme, erfolgt.

Die Aufnahmekavität weist zweckmäßigerweise ein Freivolumen zur Aufnahme mindestens desjenigen Volumens des mindestens einen Mitnahmevorsprungs auf, das im unkomprimierten oder unverdrängten Zustand des Mitnehmervorsprungs vor die Lageoberfläche vorsteht. Der Mitnehmervorsprung ist also beispielsweise in dem unverdrängten Zustand nicht durch die Zugkupplung des Anhängers belastet. Diese Maßnahme ermöglicht es, dass der Mitnehmervorsprung an sich nicht komprimierbar sein muss, auch wenn das als eine zweckmäßige Maßnahme vorgesehen sein kann, sondern in der Aufnahmekavität zumindest im wesentlichen Platz findet.

Ein Zentrum des mindestens einen Mitnahmevorsprungs und ein Zentrum der zugeordneten Aufnahmekavität, die beispielsweise auch durch eine Rastaufnahme oder Hakenaufnahme gebildet sein kann, was später noch deutlich wird, sind vorzugsweise derart hintereinander angeordnet oder fluchten derart miteinander, dass das Zentrum des mindestens einen Mitnahmevorsprungs etwa mittig in die Aufnahmekavität hinein verdrängbar ist. Somit kann also der Mitnahmevorsprung dort, wo er am weitesten vor die Lageroberfläche vorsteht, einen Rückzugsraum, nämlich die Aufnahmekavität finden.

Das erfindungsgemäße Konzept ist selbstverständlich bereits bei einem einzigen Mitnahmevorsprung realisierbar. Bevorzugt sind jedoch mehrere Mitnahmevorsprünge, beispielsweise zwei Mitnahmevorsprünge, drei Mitnahmevorsprünge oder weitere Mitnahmevorsprünge am Mitnehmer vorgesehen. Es ist eine vorteilhafte Maßnahme, wenn jedem dieser Mitnahmevorsprünge jeweils eine separate Aufnahmekavität zugeordnet ist.

Es ist auch möglich, dass eine Aufnahmekavität mehreren Mitnahmevorsprüngen zugeordnet ist. Beispielsweise finden zwei Mitnahmevorsprünge in einer einzigen Aufnahmekavität Platz, wenn sie durch die Zugkupplung verdrängt werden.

Der Mitnehmer weist vorzugsweise mindestens zwei in einem Winkelabstand an seinem Außenumfang oder einem Längsabstand an seiner Außenoberfläche angeordnete Mitnahmevorsprünge auf. Dadurch ist es möglich, dass der oder die Mitnahmevorsprünge mit hoher Wahrscheinlichkeit einen Widerhalt an der Zugkupplung, beispielsweise in einer Ritze, seitlich an einem Schließbacken oder dergleichen finden.

Der Mitnehmer, insbesondere das Mitnahmeteil, haben zweckmäßigerweise mindestens eine Mitnahmevertiefung, die zum formschlüssigen Eingriff mit einer passenden Gegenkontur der Zugkupplung vorgesehen sind, beispielsweise mit einem Mitnahmevorsprung der Zugkupplung. Bevorzugt ist es beispielsweise, wenn mindestens eine Mitnahmevertiefung für eine Haltebacke der Zugkupplung vorhanden ist. Es versteht sich, dass vorteilhaft mehrere derartige Mitnahmevertiefungen in definierten Winkelabständen über einen Außenumfang des Mitnehmers vorhanden sind, so dass in definierten Positionen eine Mitnahmekopplung zwischen dem Mitnehmer und der Zugkupplung möglich ist, insbesondere eine Drehmitnahme.

Die Mitnahmevertiefung ist beispielsweise durch einen Bereich zwischen Mitnahmevorsprüngen vorgesehen, die zum reibschlüssigen und/oder formschlüssigen Kontakt mit der Zugkupplung vorgesehen sind.

Die Mitnahmevertiefung oder die Mitnahmevorsprünge haben zweckmäßigerweise Verstärkungen, beispielsweise verstärkte Randbereiche, so dass eine Beschädigung beispielsweise durch die vorgenannte Haltebacke der Zugkupplung vermieden wird.

Der mindestens eine Mitnahmevorsprung ist zweckmäßigerweise flexibel oder elastisch oder beides. Somit kann der mindestens eine Mitnahmevorsprung durch die Zugkupplung, insbesondere die Zugkupplungsaufnahme, verformt werden, so dass sie flexibel und elastisch an deren Innenoberfläche anliegen. Die hinter dem Mitnahmevorsprung vorgesehene Aufnahmekavität ermöglicht es, dass der jeweilige Mitnahmevorsprung nicht oder nur unwesentlich vor die Lageroberfläche des Kuppelkörpers vorsteht, wenn er durch die Zugkupplung belastet wird.

Eine bevorzugte Ausführungsform der Erfindung sieht vor, dass der Mitnehmer, insbesondere dessen Träger, in einer Lageraufnahme des Kuppelkörpers beweglich gelagert ist und Lagerflächen zur Lagerung in der Lageraufnahme aufweist. Das Mitnahmeteil ist zweckmäßigerweise zwischen den Lagerflächen, beispielsweise Seitenwänden, des Trägers aufgenommen, hat jedoch keinen Berührkontakt mit der Lageraufnahme des Kuppelkörpers. Somit kann beispielsweise ein Träger aus einem relativ harten, gleitfähigem Material verwendet werden, während das Mitnahmeteil oder die Mitnahmeteile, die eher für einen Reibschluss oder Formschluss ausgelegt sind, keine Berührung mit der Lageraufnahme haben.

Eine vorteilhafte Maßnahme sieht vor, dass der Mitnehmer und/oder ein Lagerbereich des Kuppelkörpers zum Lagern des Mitnehmers mit einer Gleitbeschichtung oder einer Gleitlage versehen sind. Es ist auch möglich, dass der Mitnehmer ein Lagerelement, insbesondere einen Wälzlager oder Rollenlager, zum Lagern an dem Kuppelkörper aufweist. Auch an dem Kuppelkörper, z.B. an einem Lagerbereich des Kuppelkörpers, kann auch mindestens ein Wälzlager oder Rollenlager vorgesehen sein.

Der Mitnehmer weist zweckmäßigerweise einen in einer Lageraufnahme des Kuppelkörpers gelagerten Träger und mindestens ein an dem Träger angeordnetes Mitnahmeteil auf, wobei das mindestens eine Mitnahmeteil zur Drehmitnahme durch die Zugkupplung vorgesehen ist und dem mindestens einen Mitnahmevorsprung aufweist. Beispielsweise ist der Träger radial innen angeordnet, während das Mitnahmeteil radial außen bezüglich des Kuppelkörpers angeordnet ist. An dem einen Träger können selbstverständlich auch mehrere Mitnahmeteile vorgesehen sein.

Der Träger und das Mitnahmeteil können auch einstückig sein. Beispielsweise können der Träger aus einem relativ harten und das Mitnahmeteil aus einem relativ weichen Kunststoffmaterial gebildet sein, das in einem einzigen Arbeitsgang hergestellt ist.

Eine bevorzugte Ausführungsform sieht jedoch vor, dass das mindestens eine Mitnahmeteil lösbar an dem Träger angeordnet ist. Das Mitnahmeteil ist zweckmäßigerweise als ein auswechselbares Bauteil ausgestaltet, so dass es bei Verschleiß entfernt und am Träger ein unverschlissenes Mitnahmeteil befestigbar ist.

Der Träger weist beispielsweise eine Aufnahme für das Mitnahmeteil auf. Die Aufnahme ist beispielsweise als eine Ringnut ausgestaltet.

Das Mitnahmeteil ist vorteilhaft mit dem Träger verrastbar und/oder verklemmbar und/oder verklebt. Die Rastverbindung umfasst z.B. mindestens einen Rastvorsprung und eine Rastaufnahme. Die Hakenverbindung umfasst z.B. mindestens einen Hakenvorsprung und eine Hakenaufnahme.

Eine vorteilhafte Maßnahme sieht vor, dass mindestens eine Rastaufnahme und/oder mindestens eine Hakenaufnahme am Träger als eine Aufnahmekavität für den mindestens einen Mitnahmevorsprung ausgestaltet ist. Bevorzugt ist dabei vorgesehen, dass wahlweise in die Rastaufnahme oder die Hakenaufnahme entweder eine Rastvorsprung oder ein Haken des mindestens einen Mitnahmeteils eingerastet bzw. eingehakt werden kann oder dass dieselbe Rastaufnahme oder Hakenaufnahme alternativ als die mindestens eine dem Mitnahmevorsprung zugeordnete Aufnahmekavität dient. Somit kann beispielsweise ein Mitnahmeteil in unterschiedlichen Winkelpositionen an einem ringförmigen Träger angeordnet werden, wobei nicht für die Verrastung oder Verhakung genutzte, sozusagen freibleibende Rastaufnahmen oder Hakenaufnahmen einem jeweils davor angeordneten Mitnahmevorsprung des Mitnahmeteils als Aufnahmekavität bei einer Verdrängung durch die Zugkupplung dienen.

Besonders bevorzugt ist eine Rastverbindung oder Hakenverbindung zwischen Träger und Mitnahmeteil. Beispielsweise können das oder die Mitnahmeteile Rastvorsprünge oder Hakenvorsprünge oder beides aufweisen, die in korrespondierende Rastaufnahmen oder Hakenaufnahmen am Träger oder einem Trägersegment einrastbar bzw. einhakbar sind. Es versteht sich, dass auch umgekehrt am Träger Rastvorsprünge oder Rasthaken vorgesehen sein können, die in entsprechende Rastaufnahmen oder Hakenaufnahmen an dem Mitnahmeteil oder den Mitnahmeteilen eingreifen.

Es ist z.B. auch möglich, dass an dem Mitnahmeteil eine Klebeschicht angeordnet ist, die vorteilhaft durch eine Schutzfolie abgedeckt ist. Nach Abziehen der Schutzfolie liegt die Klebeschicht frei und das Mitnahmeteil kann auf den Träger aufgeklebt werden.

Bevorzugt sind am Träger und/oder am Mitnahmeteil Montagekodierungen, insbesondere Drehwinkelkodierungen vorhanden, so dass das Mitnahmeteil am Träger nur in einer vorbestimmten Montageposition, beispielsweise Drehwinkelposition, montierbar ist. Die Montagekodierungen umfassen beispielsweise zueinander passende Kodier-Vorsprünge und Kodier-Aufnahmen am Träger und am Mitnahmeteil oder umgekehrt. Eine Montagekodierung kann auch eine Poka Yoke sein oder als solche bezeichnet werden.

Weiterhin ist es vorteilhaft, wenn am Träger und Mitnahmeteil kooperierende Drehmitnahmemittel, z.B. mindestens ein Drehmitnahmevorsprung am einen Bauteil (Träger oder Mitnahmeteil), der in eine Drehmitnahmeaufnahme am andern Bauteil (Mitnahmeteil oder Träger) eingreift, vorgesehen sind.

Der Mitnehmer, insbesondere das Mitnahmeteil, ist zweckmäßigerweise riemenartig oder umfasst einen Riemen.

Die nachfolgenden Ausführungen beziehen sich auf ein bevorzugtes Mitnahmeteil, das besonders einfach austauschbar an einem Träger angeordnet ist.

Das Mitnahmeteil weist zweckmäßigerweise einen lang gestreckten, biegeflexiblen Körper auf oder ist dadurch gebildet und kann an die Außenkontur des Trägers angepasst werden. Somit ist es ohne weiteres an dem bereits am Kuppelkörper montierten Träger lösbar verbindbar. Der biegeflexible Körper hat also vorzugsweise ein erstes Längsende und ein zweites Längsende.

Bevorzugt ist es, wenn der Träger eine Aufnahme, zum Beispiel eine Steckaufnahme, aufweist, in der ein Endbereich des Mitnahmeteils, insbesondere des vorgenannten lang gestreckten Mitnahmeteils, aufgenommen ist. Die Aufnahme kann beispielsweise nach radial außen am Träger offen sein, so dass der Endbereich des Mitnahmeteils von radial außen her in die Aufnahme eingesteckt werden kann. Es ist aber auch möglich, dass die Aufnahme beispielsweise eine tangential oder in einem Winkel zwischen einer Tangente und einer Radiallinie offene Aufnahme ist, so dass der Endbereich des Mitnahmeteils beispielsweise schräg bezüglich einer Radiallinie bzw. einer Tangente eingesteckt werden kann. Bevorzugt ist an der Aufnahme mindestens eine Wandung vorhanden, die bei montiertem Mitnahmeteil und Gebrauch der Anhängekupplung zwischen dem Mitnahmeteil und der Zugkugelkupplung oder einem Außenumfang des Mitnahmeteils angeordnet ist.

Die Aufnahme für den Endbereich des Mitnahmeteils hat zweckmäßigerweise mindestens eine Hakenvertiefung, Rastvertiefungen oder dergleichen andere Hakenverbindungsmittel oder Rastverbindungsmittel, alternativ oder ergänzend auch Klemm-Verbindungsmittel, zum festen Halt des Endbereich des Mitnahmeteils in der Aufnahme.

Der Mitnehmer, insbesondere das Mitnahmeteil, ist vorzugsweise in der Art eines Zahnriemens ausgestaltet.

Der Zahnriemen kann zum Beispiel ein ringförmiger Zahnriemen sein. Besonders bevorzugt ist jedoch, wenn der Zahnriemen ein biegeflexibler Riemen ist, der eine Längsgestalt aufweist und somit an die Außenkontur des Trägers anpassbar ist und mit dem bereits am Kuppelkörper montierten Träger lösbar verbindbar ist.

Zwischen dem Mitnahmeteil und dem Träger oder am Mitnahmeteil ist zweckmäßigerweise eine Kompressionsschicht vorgesehen. Die Kompressionsschicht besteht oder enthält ein leicht komprimierbares Material, zum Beispiel Polyurethan. Beispielsweise ist die Kompressionsschicht am Boden der Aufnahme für das Mitnahmeteil vorgesehen. Die Kompressionsschicht kann einen Bestandteil des Trägers und/oder des Mitnahmeteils bilden oder vom Träger und Mitnahmeteil separat sein.

Die Kompressionsschicht ist radial nachgiebig, so dass das Mitnahmeteil unter Komprimierung der Kompressionsschicht in Richtung des Trägers verformbar ist, also nachgibt. Bei dieser Konstruktion können beispielsweise der Träger und das Mitnahmeteil relativ hart und/oder biegesteif sein, also verschleißfest. Die Nachgiebigkeit ist vorzugsweise im Innern des Mitnehmers vorgesehen, zwischen dem Träger und dem Mitnahmeteil.

Der den mindestens einen Mitnahmevorsprung aufweisende Bereich des Mitnehmers, zum Beispiel das mindestens eine Mitnahmeteil, besteht beispielsweise aus einem relativ abriebfesten, jedoch flexiblen oder nachgiebigen Material, z.B. mit einer Härte oder Steifigkeit von 85 Shore A oder bis zu 95 Shore A.

Es ist vorteilhaft, wenn der Träger aus einem härteren Material als das mindestens eine Mitnahmeteil oder der mindestens eine Mitnahmevorsprung besteht. Das härtere Material eignet sich beispielsweise dazu, den Mitnehmer optimal am Kuppelkörper zu lagern. Demgegenüber ist das mindestens eine Mitnahmeteil möglichst weich und nachgiebig, so dass es sich an die Kontur der Zugkupplung, zum Beispiel der Zugkupplungsaufnahme, anpassen kann und dort eine möglichst optimale Position findet.

Eine weitere Ausführungsform, auch in Kombination mit der vorgenannten Ausführungsform, kann vorsehen, dass der Träger eine gehärtete Lagerfläche oder eine gegenüber dem mindestens einen Mitnahmeteil härtere Beschichtung zum lagernden Kontakt mit einer Lageraufnahme des Kuppelkörpers aufweist.

Der Mitnehmer, insbesondere das mindestens eine Mitnahmeteil, kann auch mindestens eine Reibschlussfläche aufweisen.

Vorteilhaft ist vorgesehen, dass der Mitnehmer als ein einteiliger Ring ausgestaltet ist oder aus mindestens zwei Ringsegmenten gebildet ist oder mindestens 2 Ringsegmente umfasst. Zweckmäßigerweise sind mindestens 2 Ringsegmente des Mitnehmers mittels einer Rastanordnung und/oder mindestens einer Klammer und/oder anhand einer Verschraubung und/oder mittels einer Hakenanordnung miteinander verbunden oder verbindbar.

Der Träger kann beispielsweise mehrteilig sein, beispielsweise zweiteilig. Der Träger umfasst beispielsweise miteinander verbundene Träger- oder Ringsegmente. Die Verbindung des Trägers miteinander kann auch durch das Mitnahmeteil erfolgen.

Vorteilhaft ist es, wenn die Träger- oder Ringsegmente des Trägers miteinander direkt verbunden sind, beispielsweise durch Rastvorsprünge, Haken oder dergleichen. Es versteht sich, dass die Ringsegmente auch miteinander verklebt oder verschweißt sein können.

Es ist vorteilhaft, wenn der Mitnehmer, insbesondere der Träger, einen Ring umfasst, der mehrere Ringsegmente aufweist. Der Mitnehmer, z.B. der Träger und/oder das Mitnahmeteil, ist vorteilhaft in Umfangsrichtung mehrteilig, zumindest in einer Radialebene, d.h. dass er in einer Radialebene oder insgesamt beispielsweise 2 oder mehr Ringsegmente umfasst.

Segmente des Mitnehmers, d.h. des Trägers und/oder des Mitnahmeteils, insbesondere Ringsegmente, können beispielsweise durch einmal verschließbare Verbindungen miteinander verbunden sein, z.B. Tannenbaumschrägen, Clipse oder dergleichen. Beispielsweise ist eine Verbindung der Segmente des Mitnehmers oder Trägers in der Art von Kabelbinder-Verbindungen möglich. Aber auch sonstige Fügemethoden, z.B. Vernieten, Schrauben, Kleben, miteinander Verclipsen oder Verrasten oder dergleichen sind bei Segmenten eines erfindungsgemäßen Mitnehmers ohne Weiteres möglich.

Mitnahmeteilsegmente oder Trägersegmente, z.B. Ringsegmente, eines Mitnehmers gemäß der Erfindung können beispielsweise miteinander verklammert werden. Auch ein Verschrauben oder Verhaken ist ohne weiteres möglich. Es ist auch möglich, dass bei einem mindestens zwei oder mehrere Radiallagen umfassenden Mitnehmer Radiallagen durch Rastverbindungen, Verklammern, Haken oder dergleichen miteinander verbunden sind.

Vorteilhaft ist vorgesehen, dass zwei oder mehr Trägersegmente oder Ringsegmente durch eine Klammer zusammengehalten werden, wobei die Klammer beispielsweise in Umfangsrichtung einen Schlitz oder eine Ausnehmung umfasst. Der Ring bzw. die Klammer erstreckt sich über einen größten Umfang eines durch die Ringsegmente gebildeten Träger-Rings weg.

Die Sensoranordnung weist zweckmäßigerweise mindestens einen Sensor und mindestens einen Sensorgeber auf, die bei der Erfassung der Winkelstellung der Zugkupplung relativ zu dem Kuppelkörperträger zusammen wirken.

Bevorzugt ist ein magnetisches Prinzip, d.h. der Sensor umfasst einen oder mehrere Sensorkomponenten, die magnetisch aktivierbar sind. Beispielsweise handelt es sich bei dem Sensor um einen magnetisch resistiven Sensor, insbesondere einen GMR- oder AMR-Sensor. Es versteht sich, dass die Erfindung nicht auf magnetische Sensoren beschränkt ist, d.h. dass beispielsweise auch optische Sensoren möglich sind, was später noch deutlich wird.

In Zusammenwirkung mit dem magnetischen Sensor und der magnetischen Sensoranordnung weist der Mitnehmer zweckmäßigerweise eine Magnetanordnung mit einem oder mehreren Magneten auf. Wenn mehrere Magnete vorhanden sind, sind ihre Pole zweckmäßigerweise in Umfangsrichtung des Mitnehmers zueinander beabstandet. Beispielsweise sind mehrere Magnete, insbesondere zwei oder mehr Magnete, in Umfangsrichtung hintereinander angeordnet, wobei die Polarität der Magnete zweckmäßigerweise gleich orientiert ist, d.h. dass ein Südpol des einen Magneten neben einem Nordpol des benachbarten Magneten angeordnet ist. Es versteht sich, dass jedoch auch eine umgekehrte Magnetisierung möglich ist, d.h. dass einander gegenüberliegende Südpole oder Nordpole vorgesehen sind. Weiterhin ist es denkbar, einen ringförmigen Magneten vorzusehen.

Der Mitnehmer umfasst zweckmäßigerweise mindestens eine Sensorteilaufnahme, vorteilhaft eine Anordnung von Sensorteilaufnahmen, die zum Aufnehmen mindestens eines Gebers, zum Beispiel eines Magneten, oder zur Aufnahme eines Sensors ausgestaltet sind. Diese mindestens eine Sensorteilaufnahme ist zweckmäßigerweise an einem Innenumfang des Mitnehmers angeordnet. Beispielsweise ist die mindestens eine Sensorteilaufnahme als Steckaufnahme oder Tasche ausgestaltet. Somit können der Geber oder der Sensor in eine jeweilige Steckaufnahme eingesteckt werden. Bevorzugt sind Rastmittel zum Verrasten des jeweiligen Gebers oder Sensors in der Sensorteilaufnahme des Mitnehmers vorgesehen. Bevorzugt ist es, dass der Geber oder Sensor auswechselbar am Mitnehmer aufgenommen ist. An dieser Stelle sei bemerkt, dass selbstverständlich ein Geber oder Sensor auch fest mit dem Mitnehmer verbunden sein kann, beispielsweise verklebt oder in ein Material des Mitnehmers eingegossen oder eingebettet sein kann.

Des Weiteren kann der Mitnehmer auch aus einem magnetischen Kunststoffmaterial oder einem magnetisierbaren Kunststoffmaterial bestehen oder ein solches Kunststoffmaterial aufweisen.

Es ist aber auch möglich, dass der Mitnehmer einen optischen Geber, z.B. eine Reflektionsmarkierung, einen Strichcode oder dergleichen aufweist, mit der der Sensor, in diesem Fall ein optischer Sensor, zusammenwirkt. Die Magnetisierung des Mitnehmers kann beispielsweise anhand von magnetischem Material, z.B. Metallsplittern, seltenen Erden oderdergleichen, erfolgen.

Der Mitnehmer, insbesondere der Träger, weist zweckmäßigerweise mindestens eine Sensorteilaufnahme zur Aufnahme eines Sensorgebers oder eines Sensorelements auf. Bevorzugt ist diese Sensorteilaufnahme oder Anordnung von Sensorteilaufnahmen durch einen Deckel oder eine Deckelanordnung verschließbar. Der Deckel kann gleichzeitig auch ein Lagerelement bilden oder eine Lagerfläche zur Lagerung in einer Lageraufnahme am Kuppelkörper bereitstellen.

Eine bevorzugte Ausführungsform der Erfindung sieht vor, dass der Mitnehmer, insbesondere der Träger, eine Reihe entlang einer Reihenlinie nebeneinander angeordneter Sensorteilaufnahmen für Sensorgeber oder Sensorelemente (oder beides) aufweist, in denen ein Einsteckkörper mit mehreren Sensorgebern und/oder Sensorelementen angeordnet ist. Der Einsteckkörper kann beispielsweise seinerseits flexibel sein, so dass er an eine Ringform des Trägers (wenn dieser als Ring ausgestaltet ist) anpassbar ist. In oder an dem Einsteckkörper sind die Sensorgeber oder Sensorelemente entlang der Reihenlinie angeordnet. Es ist auch möglich, dass der Einsteckkörper die Sensorgeber integral bildet. Beispielsweise kann der Einsteckkörper aus einem magnetisierbaren Kunststoff bestehen, d.h. aus einer Kunststoffmaterial, das beispielsweise Eisenfeilspäne oder andere magnetisierbare Komponenten enthält. Bevorzugt ist es, wenn die Sensorgeber, beispielsweise Magnete, abwechselnd, d.h. mit unterschiedlicher Polarität, polarisiert sind.

Der Kuppelkörper weist vorteilhaft eine Sensoraufnahme auf, in der eine Komponente einer Sensoranordnung, insbesondere mindestens ein Sensor, zur Erfassung einer Winkelstellung der Zugkupplung relativ zu dem Kuppelkörperträger angeordnet oder anordenbar ist.

Beispielsweise ist mindestens ein Sensor, zum Beispiel ein optischer Sensor, ein induktiver oder magnetischer Sensor oder dergleichen ortsfest am Kuppelkörper, beispielsweise in der Sensoraufnahme, angeordnet, während einer oder mehrere Geber an dem Mitnehmer angeordnet sind. Es ist aber prinzipiell auch möglich, dass beispielsweise ein Sensor am Mitnehmer angeordnet ist, der von einem ortsfest am Kuppelkörper, zum Beispiel in der Sensoraufnahme, angeordneten Geber betätigbar ist. Bei dem Geber handelt es sich beispielsweise um eine Lichtquelle, einen Magneten, oder dergleichen.

Es versteht sich, dass zweckmäßigerweise der Mitnehmer mit seiner Außenkontur an die Außenkontur des Kuppelkörpers angepasst ist, auch wenn Mitnahmevorsprünge des Mitnehmers vor den Kuppelkörper vorstehen. Beispielsweise sind die Mitnahmevorsprünge gerundet oder haben einen Schrägverlauf derart, dass sie nahezu mit der Außenkontur des Kuppelkörpers fluchten, vor diese jedoch zur Drehmitnahme durch die Zugkupplungsaufnahme vorstehen.

Bevorzugt besteht der Mitnehmer oder eine Komponente des Mitnehmers ganz oder im Wesentlichen aus einem thermoplastischen Polyurethan (PU), insbesondere mit vernetzter Struktur (TPUX). Vorteilhaft ist jedenfalls ein elastisches Kunststoffmaterial.

Der Mitnehmer, insbesondere das Mitnahmeteil, kann beispielsweise aus einem elastischen Kunststoff bestehen. Es ist aber auch möglich, dass der Mitnehmer aus einem anderen, insbesondere flexiblen, Material besteht, beispielsweise aus einem flexiblen Metall oder einem nachgiebigen Metall. Beispielsweise kann der Mitnehmer im Bereich des Mitnahmevorsprungs aus einem Federstahl-Material bestehen. Auch ein Stahlnetz oder Stahlgitter kann als Material für den Mitnehmer dienen.

Die Sensoranordnung umfasst zweckmäßigerweise mindestens eine Lichtquelle, deren Licht-Austrittsbereich zum Mitnehmer hin gerichtet ist, so dass durch diesen Licht reflektierbar ist. Ein Licht-Erfassungsbereich des mindestens einen optischen Sensors ist so ausgerichtet, dass er zur Erfassung des reflektierten Lichts geeignet ist.

Die Sensoranordnung weist - unabhängig davon, ob sie einen magnetischen, optischen oder auf einem sonstigen Messprinzip arbeitenden Sensor aufweist - zweckmäßigerweise Signalmittel zur Erzeugung eines eine Winkelstellung des Mitnehmers relativ zu dem Kuppelkörperträger anzeigenden Winkelsignals anhand eines Messsignals auf, das von dem mindestens einen beispielsweise optischen oder magentischen Sensor anhand durch den Mitnehmer erzeugten Signalen, z.B. reflektiertem Licht, Magnetfeldänderungen oder dergleichen, erzeugbar ist.

Die Signalmittel sind zweckmäßigerweise zur Berechnung von Koordinatendaten, beispielsweise Winkel-Koordinatendaten, anhand von Geschwindigkeitsdaten des mindestens einen Sensors ausgestaltet. Der Sensor misst also eine Winkeländerung des Mitnehmers relativ zum Kuppelkörper, um anhand dieses Geschwindigkeitssignals wiederum Winkel-Koordinatendaten zu ermitteln.

Der mindestens eine Sensor - es können auch mehrere Sensoren vorgesehen sein - ist vorzugsweise in einer Sensoraufnahme des Kuppelkörpers angeordnet. In der Sensoraufnahme des Kuppelkörpers könnte aber auch ein Geber zur Betätigung eines oder mehrerer in dem Mitnehmer angeordneten Sensoren angeordnet sein. Von der Sensoraufnahme führt beispielsweise ein Anschlusskanal und oder ein Montagekanal beispielsweise zu einer Auswerteeinrichtung zur Auswertung von Sensorsignalen des mindestens einen Sensors. Selbstverständlich könnte auch eine drahtlose Übertragung zwischen Sensor und Auswerteeinrichtung vorgesehen sein. Weiterhin ist es denkbar, dass der Sensor eine Auswerteeinrichtung aufweist und diese beispielsweise mit dem Bordnetz des Kraftfahrzeugs direkt, drahtlos, zum Beispiel über Funk, oder auch leitungsgebunden, kommuniziert.

Weiterhin ist es vorteilhaft, wenn die Anhängekupplung eine Busschnittstelle oder eine sonstige elektrische Schnittstelle zur Ankopplung an das Bordnetz des Kraftfahrzeugs zur Übertragung des Winkelsignals aufweist. Die Busschnittstelle ist beispielsweise eine CAN-Schnittstelle (Controller Area Network), eine LIN-Schnittstelle (Local Interconnect Network) oder dergleichen.

Es ist vorteilhaft vorgesehen, dass der Mitnehmer drehbar und/oder verschieblich an dem Kuppelkörper gelagert ist und der von der Zugkupplung, insbesondere einer Zugkupplungsaufnahme derselben, relativ zu dem Kuppelkörper verdrehbar oder verschiebbar ist. Der Mitnehmer ist beispielsweise drehbar an dem Kuppelkörper gelagert. Aber auch verschiebliche Mitnehmer können nach dem erfindungsgemäßen Konzept aufgebaut sein. Der Mitnehmer ist beispielsweise linear verschieblich an dem Kuppelkörper gelagert und kann von der Zugkupplungsaufnahme verschoben werden, beispielsweise linear.

Das erfindungsgemäße Konzept ist beispielsweise bei einem ringförmigen Mitnehmer anwendbar. Die das Ringgestalt ist jedoch optional

Der Kuppelkörper ist zweckmäßigerweise kugelförmig und die Zugkupplung weist vorteilhaft eine Kupplungsaufnahme auf.

Bevorzugt ist der Kuppelkörper etwa kugelig oder bildet eine Kugel. Diese Kugel kann oberseitig abgeflacht sein, wie es bei Normkugeln üblich ist. Beispielsweise bildet der Kuppelkörperträger einen Kupplungsarm oder weist einen solchen auf.

An dieser Stelle sei bemerkt, dass der Kuppelkörperträger abnehmbar, insbesondere steckbar, oder fest am Kraftfahrzeug montiert sein kann oder auch an einem Lager dergestalt, dass der Kuppelkörperträger zwischen einer Gebrauchsstellung und einer Nichtgebrauchsstellung verstellbar gelagert ist. In der Nichtgebrauchsstellung ist der Kuppelkörperträger bzw. auch der Kuppelkörper beispielsweise unter einer Heckschürze oder einem Heck-Stoßfänger des Kraftfahrzeuges verborgen, jedenfalls gegenüber Sicht im Wesentlichen abgedeckt, so dass eine optisch ansprechende Gestaltung getroffen ist. In der Betriebsstellung hingegen steht der Kuppelkörper nach hinten vor das Kraftfahrzeug□ vor, beispielsweise nach hinten vor einen Stoßfänger, so dass der Anhänger angehängt werden kann.

Zum Kupplungsarm sei noch nachgetragen, dass dieser zwar selbstverständlich in einer bevorzugten Ausführungsform eine armartige Gestalt hat. Es ist aber auch möglich, dass unter dem Begriff "Kupplungsarm" ganz allgemein ein Kuppelkörperträger verstanden wird, der eine durchaus massive Bauart aufweisen kann. Mithin ist also der Kupplungsarm nicht auf eine Ausführungsform als Stange oder dergleichen reduziert, sondern kann durchaus massive Gestalt haben.

Wie bereits erwähnt, handelt es sich bei dem Kupplungselement oder dem Kuppelkörper zweckmäßigerweise um eine Kugel. Die Kugelgestalt ermöglicht es, dass in an sich bekannter Weise die Zugkupplung des Anhängers auf dem Kupplungselement in der Art eines Kugelgelenks oder einer Kugelgelenkpfanne gleiten kann.

Vorzugsweise ist vorgesehen, dass der Kuppelkörper im Wesentlichen kugelig ist und zwischen seiner von dem Kuppelkörperträger abgewandten Oberseite und dem Kuppelkörperträger einen Äquatorialbereich mit einem maximalen Außenumfang aufweist, wobei der Mitnehmer oberhalb oder unterhalb des Äquatorialbereichs des Kuppelkörpers angeordnet ist, so dass der maximale Außenumfang des Kuppelkörpers in dem Äquatorialbereich zum Halten der Zugkupplungsaufnahme bereit steht. Es ist z.B. vorgesehen, dass der Mitnehmer oberhalb oder unterhalb einer Äquatoriallinie oder Äquatorialebene des Kuppelkörpers angeordnet ist.

Vorteilhaft ist vorgesehen, dass der Mitnehmer unterhalb der Oberseite des Kuppelkörpers angeordnet ist, so dass an der Oberseite des Kuppelkörpers eine obere Stützfläche vorhanden ist.

Eine vorteilhaft Maßnahme sieht vor, dass eine Breite des Äquatorialbereichs, oberhalb oder unterhalb dessen der Mitnehmer angeordnet und in dem der Kuppelkörper nicht durch den Mitnehmer geschwächt ist, so bemessen ist, dass die Zugkupplungsaufnahme bei einer Schrägstellung um einen vorbestimmten Winkel zu einer Äquatorialebene des Kuppelkörpers den Kuppelkörper im Bereich seines maximalen Außenumfangs in dem Äquatorialbereich umgreifen kann. Der vorbestimmte Winkel beträgt zweckmäßigerweise mindestens 10 Grad zur Horizontalen, vorzugsweise mindestens 15 Grad zur Horizontalen, besonders bevorzugt mindestens 20 Grad zur Horizontalen, insbesondere mindestens 25 Grad zur Horizontalen.

Nachfolgend werden Ausführungsbeispiele der Erfindung anhand der Zeichnung erläutert. Es zeigen:

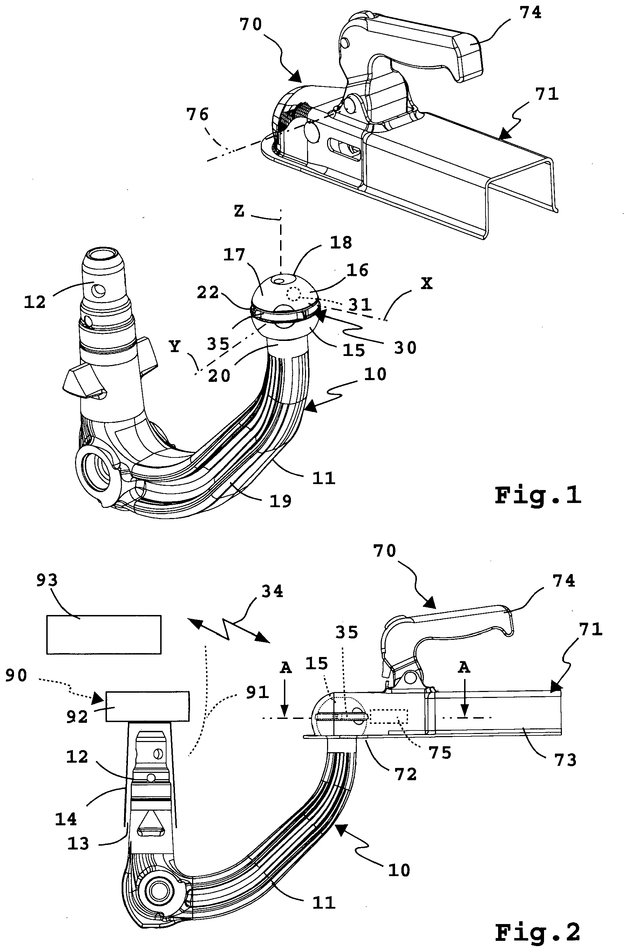

- Figur 1: ein Kupplungssystem in perspektivischer Schrägdarstellung umfassend eine Anhängekupplung für ein Kraftfahrzeug und eine Zugkupplung eines Anhängers, die in
- Figur 2: von der Seite und im aneinander angekuppelten Zustand dargestellt sind,

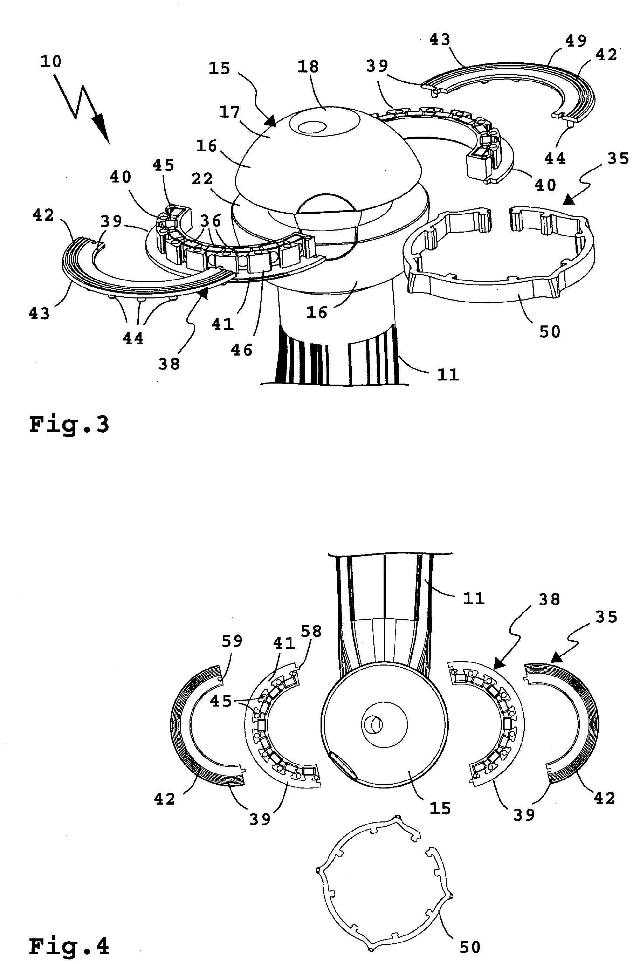

- Figur 3: eine perspektivische Explosionsdarstellung der Anhängekupplung gemäß Figuren 1, 2,
- Figur 4: die Darstellung gemäß Figur 3 von oben,
- Figur 5: eine Draufsicht auf ein Mitnahmeteil und einen Teil eines Trägers eines Mitnehmers der Anhängekupplung gemäß Figuren 1-4,
- Figur 6: das Mitnehmerteil aus Figur 5 von oben,
- Figur 7: das Mitnehmerteil gemäß Figuren 5 und 6 von der Seite,
- Figur 8: eine Schnittdarstellung durch die Anhängekupplung und die Zugkupplung im aneinander angekuppelten Zustand, etwa entsprechend einer Schnittlinie A-A in Figur 2, und
- Figur 9: ein alternatives Mitnahmeteil, das beispielsweise an dem in den Figuren 3, 4 und 5 dargestellten Träger verwendbar ist

Eine Anhängekupplung 10 ist an einem Kraftfahrzeug 90 befestigt, beispielsweise einem mit dem Kraftfahrzeug 90 verbundenen Querträger 92. Ein Kuppelkörperträger 11 der Anhängekupplung 10 kann z.B. fest am Querträger 92 montiert, z.B. angeschraubt sein oder lösbar am Kraftfahrzeug 90 befestigbar sein, z.B. ansteckbar. Z.B. kann ein Steckende 12 des Kuppelkörperträgers 11 in eine Steckaufnahme 13 einer am Querträger 92 angeordnete Halterung 14 eingesteckt werden. Eine bewegliche Lagerung, insbesondere eine Dreh- und/oder Schiebelagerung, des Kuppelkörperträgers 11 bezüglich des Kraftfahrzeugs 90 ist auch möglich, z.B. anhand einer geeigneten Lagereinrichtung.

Der Kuppelkörperträger 11 steht nach hinten vor einen Stoßfänger 91 des Kraftfahrzeuges 90 vor. Der Kuppelkörperträger 11 trägt an seinem freien Ende einen Kuppelkörper 15, der vorliegend eine kugelige Gestalt hat. Dementsprechend kann eine Zugkupplung 70 eines Anhängers 71 mit ihrer Zugkupplungsaufnahme 72 auf den kugeligen Kuppelkörper 15 aufgesetzt werden.

Die Zugkupplung 70 ist an einem freien Ende einer Deichsel 73 des Anhängers 71 angeordnet und mittels eines Schwenkhebels 74 betätigbar. Wenn der an um eine Schwenkachse 76 schwenkbar gelagerte Schwenkhebel 74 in die Schließstellung, das heißt in Richtung der Deichsel 73 bewegt wird, betätigt er in an sich bekannter Weise einen Haltebacken 75 in Richtung einer Lageroberfläche 16 des Kuppelkörpers 15. Somit liegt also eine Innenfläche 77 der Zugkupplungsaufnahme 72 an der Lageroberfläche 16 an.

Der Kuppelkörper 15 ist zweckmäßigerweise feststehend bezüglich des Kuppelkörperträgers 11, zumindest drehfest, so dass die Zugkupplungsaufnahme 72 an der Lageroberfläche 16 in bekannter Weise außenseitig entlang gleitet.

Die vorliegende Ausgestaltung des Kuppelkörpers 15 als Kupplungskugel, die bevorzugt ist, ermöglicht die Ankupplung einer üblichen, normgerechten Zugkugelkupplung an die erfindungsgemäße Anhängekupplung 10, vorliegend also der Zugkupplung 70. Diese ist dementsprechend eine Zugkugelkupplung.

Die Lageroberfläche 16 umfasst z.B. eine Kugeloberfläche 17. Der Kuppelkörper 15 hat an seiner Oberseite eine Abflachung 18.

Der Kuppelkörperträger 11 weist einen Kupplungsarm 19 auf, an dessen freiem, vom Steckende 12 entfernten Ende 20 der Kuppelkörper 15 angeordnet ist.

Mit einer Sensoranordnung 30 sind Winkelstellungen des Anhängers 71 relativ zur Anhängekupplung 10 und somit zum Kraftfahrzeug 90 ermittelbar.

Die Sensoranordnung 30 umfasst einen Sensor 31, beispielsweise einen magnetischen Sensor, der in einer Sensoraufnahme 21 direkt am Kuppelkörper 15 angeordnet ist.

Die Sensoraufnahme 21 und somit der Sensor 31 befinden sich vorzugsweise am Kuppelkörper 15. Z.B. sind die Sensoraufnahme 21 und der Sensor 31 in einem äquatorialen Bereich des Kuppelkörpers 15 angeordnet.

Der Sensor 31 ist beispielsweise an einer Platine oder einem Modul 33 angeordnet. Das Modul 33 kann weitere Komponenten enthalten, beispielsweise einen Filter zur Ausfilterung von unplausiblen Spitzenwerten, einen Verstärker zu Verstärkung eines Sensorsignals, das der Sensor 31 erzeugt, oder dergleichen, also vorteilhaft eine Auswerteeinrichtung 32. Selbstverständlich können diese Funktionen auch unmittelbar in den Sensor 31 integriert sein, insbesondere dann, wenn dieser als ein ASIC, ausgebildet ist.

Die Auswerteeinrichtung 32 und/oder das Modul 33 sind vorzugsweise dazu ausgestaltet, vom Sensor 31 erzeugte Signale auszuwerten und insbesondere in relative Winkelsignale umzuwandeln, die dann von einem Bordnetz 93 des Kraftfahrzeuges 90 genutzt werden können, z.B. zum Rangieren, zu einer elektronischen Fahrstabilisierung etc. Die Auswerteeinrichtung 32 und/oder das Modul 33 weisen hierzu zweckmäßigerweise eine Bus-Schnittstelle, insbesondere eine CAN-Bus-Schnittstelle, eine LIN-Bus-Schnittstelle oder dergleichen, auf. Z.B. kommunizieren die Auswerteeinrichtung 32 und/oder das Modul 33 leitungsgebunden oder drahtlos, z.B. per Funk (angedeutet durch einen Pfeil 34), mit dem Bordnetz 93.

Jedenfalls befindet sich der Sensor 31 vor Ort dort, wo die Winkelmessung tatsächlich stattfinden soll.

Am Kuppelkörper 15 befindet sich weiterhin ein Mitnehmer 35, der in einer Lageraufnahme 22 des Kuppelkörpers 15 drehbar gelagert ist. Durch einen Pfeil 37 ist die Drehbarkeit des Mitnehmers 35 relativ zum Kuppelkörper 15 angedeutet.

Die Lageraufnahme 22 ist beispielsweise durch eine Ringnut gebildet. Die Lageraufnahme 22 ist beispielsweise knapp oberhalb des Äquators des als Kupplungskugel ausgestalteten Kuppelkörpers 15 angeordnet.

Der Mitnehmer 35 ist ringförmig, d.h. er ist als ein Ring ausgestaltet. In dem Mitnehmer 35 sind Magnete 36 aufgenommen, deren Magnetfeld den Sensor 31 erregt bzw. beaufschlagt. Ändert sich nunmehr die Winkelposition der Magnete 36 relativ zum Sensor 31, erzeugt dieser ein Winkelsignal, das die Winkelstellung des Mitnehmers 35 relativ zum Sensor 31 repräsentiert. Da der Sensor 31 bezüglich des Kuppelkörpers 15 ortsfest ist, signalisiert und identifiziert das Winkelsignal, das der Sensor 31 erzeugt, zugleich eine Winkelstellung des Mitnehmers 35 relativ zum Kuppelkörper 15.

Die Magnete 36 sind beispielsweise nebeneinander, jedoch zweckmäßigerweise mit einem Abstand zueinander im Mitnehmer 35 aufgenommen. Die Magnete 36 sind beispielsweise in Umfangsrichtung des Mitnehmers 35 nebeneinander angeordnet.

Die Magnete 96 wirken beispielsweise als Sensorgeber für den induktiv oder magnetisch arbeitenden Sensor 31.

Der Mitnehmer 35 umfasst einen Träger 38 sowie ein am Träger 38 lösbar angeordnetes Mitnahmeteil 50.

Der Träger 38 ist zur besseren Montierbarkeit am Kuppelkörper 15 mehrteilig und weist beispielsweise 2 Trägersegmente 39 auf. Die Trägersegmente 39 sind beispielsweise Ringsegmente.

Die Trägersegmente 39 weisen jeweils ein Grundelement 40 auf, das mit einem Wandelement 42 in der Art eines Deckels abgedeckt ist. Vom Grundelement 40 steht ein Wandabschnitt 41 ab. Das Wandelement 42 und eine Wand 43 des Wandabschnitt 41 begrenzen eine im Querschnitt U-förmige Aufnahme 46 für das Mitnahmeteil 50.

Die Wand 43 und der Wandabschnitt 41 sind jeweils als Lagerwände ausgestaltet, die an den Innenseiten der Lageraufnahme 22 des Kuppelkörpers 15 entlang gleiten. Eine Rillenanordnung 49 erleichtert beispielsweise das Gleiten des Mitnehmers 35 oder 135 in der Lageraufnahme 22.

An dem Wandelement 42 sind beispielsweise Steckvorsprünge 44 angeordnet, die in korrespondierende Steckaufnahmen 45 am Grundelement 40 einsteckbar sind. Die Steckvorsprünge 44 sind beispielsweise als Steckzapfen ausgestaltet.

Das Wandelement 42 deckt beispielsweise Sensorteilaufnahmen 47 ab, in denen die Magnete 36, also Sensorgeber, angeordnet sind.

Über den gesamten Umfang des Trägers 38 und somit des Mitnehmers 35 sind Sensorteilaufnahmen 47 vorgesehen, so dass dort die Magnete 36 bzw. Sensorgeber angeordnet werden können. Somit kann also der Mitnehmer 35 in jeder Drehwinkelposition ein Magnetfeld zur Betätigung des Sensors 31 erzeugen. Selbstverständlich ist es auch möglich, dass mehrere Magnete 36 zu einer Magnetanordnung verbunden sind, so dass beispielsweise ein Streifen mit mehreren nebeneinander angeordneten Magneten 36 ins nebeneinanderliegende Sensorteilaufnahmen 47 eingesteckt werden kann. Zwischen den Sensorteilaufnahmen 47 ist beispielsweise jeweils ein Verbindungsabschnitt oder eine Vertiefung 64 zur Aufnahme von Verbindungsstegen oder anderen Verbindungsabschnitten zwischen den Magneten 36 vorgesehen.

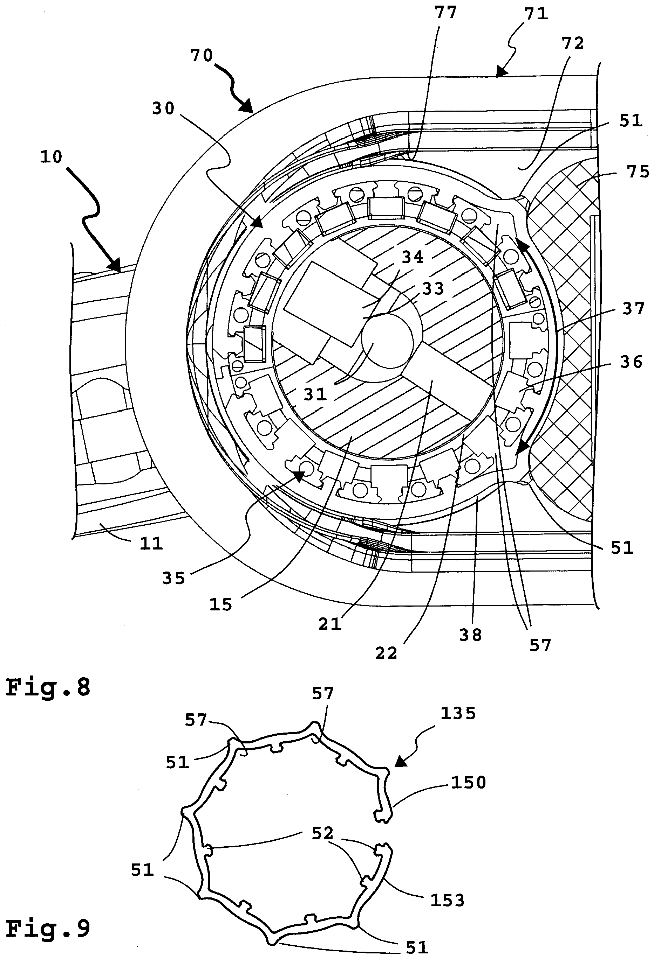

Von dem Mitnahmeteil 50 stehen insgesamt 4 Mitnahmevorsprünge 51 ab, beispielsweise in einem Winkelabstand von 90°. Bei dem in Figur 9 dargestellten Ausführungsbeispiel eines alternativen Mitnahmeteils 150 sind weitere, beispielsweise 7 oder 8 Mitnahmevorsprünge 51 vorgesehen. Das Mitnahmeteil 150 kann anstelle des Mitnahmeteils 50 am Träger 38 befestigt werden.

Zu diesem Zweck sind an den Mitnahmeteilen 50 und 150 jeweils Rastvorsprünge 52 vorgesehen, beispielsweise in der Art von Rastzapfen, die in zugehörige Rastaufnahmen 48 am Träger 38 ein gerastet werden können. Die Rastvorsprünge 52 stehen nach radial innen vor Grundkörper 53 und 153 der Mitnahmeteile 50 und 150 vor.

Die Grundkörper 53 und 153 sind vorzugsweise vollständig in der Aufnahme 46 des Trägers 38 aufgenommen. Die Mitnahmevorsprünge 51 stehen jedoch vor den Außenumfang des Mitnehmers 35 oder 135 vor, wenn sie nicht von außen her durch Druck beaufschlagt werden, beispielsweise durch die Zugkupplungsaufnahme 72 und ein anderes Bauteil der Zugkupplung 70.

Während der Träger 38 aus einem relativ harten Material, zum Beispiel Metall, relativ hartem Kunststoff oder dergleichen besteht, ist das Mitnahmeteil 50 oder 150 recht elastisch bzw. nachgiebig, so dass die Mitnahmevorsprünge 51 hinter die vorderen Stirnseiten der Wand 43 bzw. des Wandabschnitts 41 des Trägers 38 und/oder hinter die Lageroberfläche 16 des Kuppelkörpers 15 zurück verstellbar sind. Die Mitnahmevorsprünge 51 geben also leicht nach, so dass der Mitnehmer 35 oder der das Mitnahmeteil 150 aufweisende Mitnehmer 135 (unvollständig dargestellt in Figur 9) sozusagen in eine Mitnahmeposition im Innenraum der Zugkupplungsaufnahme 72 schlüpft oder gleitet, in der er mit relativ wenig Widerstand von der Zugkupplung 70 mitgenommen werden kann.

In der Praxis wurde beispielsweise herausgefunden, dass nach einigen Bewegungszyklen, bei der sich die Zugkupplung 70 relativ zum Kuppelkörper 15 beispielsweise um eine Z-Achse (vertikal verlaufende Achse durch den Kuppelkörper 15 hindurch) und/oder eine x-Achse und/oder eine Y-Achse(horizontal in Fahrzeuglängsrichtung oder Fahrzeugquerrichtung des Kraftfahrzeugs 90 verlaufende Achsen) bewegt, die in Figur 8 angedeutete oder jedenfalls eine andere, eine sichere Drehmitnahme zwischen dem Mitnehmer 35 oder 135 einerseits und der Zugkupplung 70 andererseits sicher stellende Position ergibt.

Bei dem Mitnahmeteil 50 sind beispielsweise die Abstände zwischen 2 Mitnahmevorsprüngen 51 so ausgestaltet, dass der Haltebacken 75 zwischen diese Mitnahmevorsprünge 51 passt (Figur 8) . Das muss jedoch nicht sein. Es genügt z.B. auch, wenn beispielsweise einer der Mitnahmevorsprünge 51 am Haltebacken 75 in Drehmitnahme-Eingriff ist, während ein anderer Mitnahmevorsprung 51 mit einem anderen Bereich der Zugkupplungsaufnahme 72 drehfest gekoppelt oder in Drehmitnahme-Eingriff ist. Beispielsweise sind auch im Bereich der Innenfläche 77 Vertiefungen, Rillen oder dergleichen andere zu einer Drehmitnahme des Mitnehmers 35 oder 135 geeignete Drehmitnahmekonturen vorhanden.

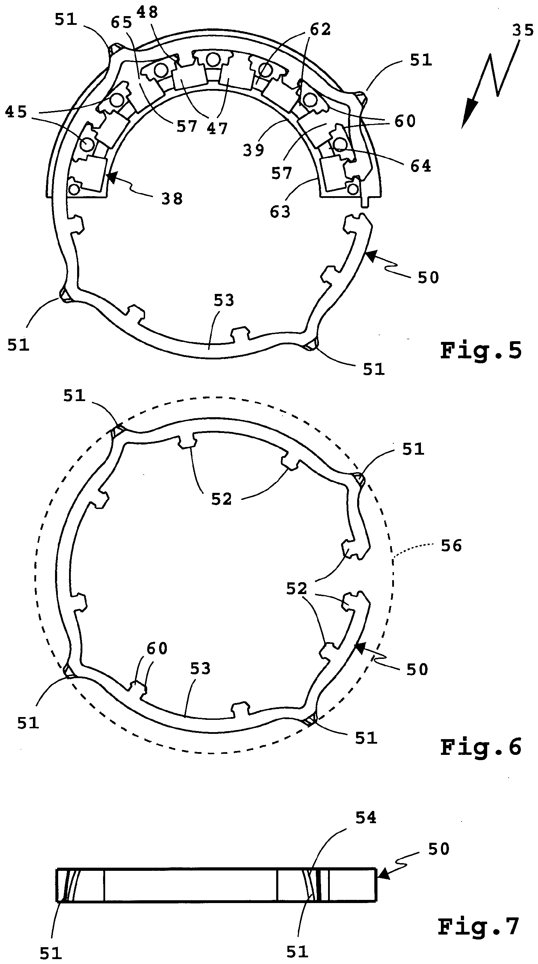

Die Mitnahmevorsprünge 51 weisen beispielsweise schräg verlaufende Aufgleitkonturen 54 auf (Figur 7), die ein einfaches Aufgleiten oder Hineingleiten von Drehmitnahmekonturen, zum Beispiel dem Haltebacken 75, ermöglichen.

Die Rastvorsprünge 52 und die Mitnahmevorsprünge 51 sind mit den Grundkörpern 53 und 153 einstückig. Insgesamt bestehen die Grundkörper 53 und 153 aus einem relativ weichen, elastischem Kunststoff, so dass die Mitnahmevorsprünge 51 nach radial innen ausweichen können.

In Draufsicht haben die Mitnahmevorsprünge 51 eine etwa V-förmige Kontur.

Ein Zentrum 55 der Mitnahmevorsprünge 51 steht, was man in Figur 8 beispielsweise sieht, relativ weit vor den Außenumfang des Trägers 38 vor, befindet sich jedoch noch innerhalb einer Umhüllenden 56. Die Umhüllende 56 hat einen Durchmesser von beispielsweise 54 mm, während der Kuppelkörper 15 einen maximalen Durchmesser von 50 mm hat. Radial steht also jeder Mitnahmevorsprung 51 etwa 2 mm vor die Kugeloberfläche 17 bzw. die Lageroberfläche 16 vor, wenn er unbelastet ist, beispielsweise ohne Druckbeaufschlagung durch die Zugkupplung 70.

Weil die Mitnahmevorsprünge 51 relativ weit radial vor den Träger 38 bzw. die Lageroberfläche 16 vorstehen, ermöglichen sie eine optimale Drehmitnahme durch die Zugkupplung 70. Dennoch können die Mitnahmevorsprünge 51 vollständig hinter die Außenkontur des Kuppelkörpers 15, nämlich die Lageroberfläche 16 zurück verstellt werden. Hinter jeder Mitnahmevorsprung 51 ist nämlich eine Aufnahmekavität 57 vorgesehen, in die der jeweilige Mitnahmevorsprung 51 hinein verstellt werden kann.

Die Mitnahmeteile 50 und 150 sind in der Art von der Riemen ausgestaltet. Sie können ohne weiteres durch die Rastverbindung mittels der Rastvorsprünge 52 und der Rastaufnahmen 48 lösbar am Träger 38 befestigt werden. Der Träger 38 selbst verbleibt in der Regel dauerhaft am Kuppelkörper 15. Die beiden Ringsegmente oder Trägersegmente 39 des Trägers 38 sind beispielsweise durch die Mitnahmeteile 50 und 150 oder auch durch eine Steckverbindung und/oder eine Verrastung, beispielsweise mittels Steck- oder Rastvorsprüngen 58 und Steck- oder Rastaufnahmen 59 ineinander gesteckt oder miteinander verrastet. Selbstverständlich wäre eine Klebeverbindung auch möglich. Es wäre selbstverständlich auch möglich, die Wandelemente 42 mit den Grundelementen 40 zu verkleben.

Die Rastvorsprünge 52 haben beispielsweise sich in Umfangsrichtung erstreckende Hakenvorsprünge 60 zum Verhaken mit Hakenvorsprüngen 61 des Trägers 38. Beispielsweise sind die Hakenvorsprünge 61 an Haltekörpern 62 der Grundelemente 40 angeordnet.

Zwischen den Haltekörpern 62 ist jeweils ein Freiraum vorhanden, der zum einen die Sensorteilaufnahme 47, zum andern die Rastaufnahme 48 begrenzt. Die Sensorteilaufnahmen 47 und die Rastaufnahmen 48 sind radial hintereinander angeordnet.

An ihrer radialen Innenseite sind die Haltekörper 62 durch eine Wand 63 miteinander verbunden, die zugleich eine Innenumfangswand des Trägers 38 bildet. Die Wand 63 gleitet am Boden der Lageraufnahme 22 entlang.

Zwischen jeweils 2 Mitnahmevorsprüngen 51 sind beim Mitnahmeteil 50 jeweils 2 Rastvorsprünge 52 angeordnet, beim Mitnahmeteil 150 nur ein Rastvorsprung 52. Bei beiden Mitnahmeteilen 50 und 150 ist jedenfalls radial innen dem jeweiligen Mitnahmevorsprung 51 entgegengesetzt kein Rastvorsprung vorhanden. Somit ist es möglich, dass der jeweilige Mitnahmevorsprung 51 in die nicht durch der das Mitnahmeteil 50 oder 150 genutzte Rastaufnahme 48, die somit die Aufnahmekavität 57 bildet, hineingedrückt wird, wenn von außen eine Beaufschlagung, beispielsweise durch die Zugkupplung 70, erfolgt.

Zugleich hat diese Maßnahme auch den Vorteil, dass es auf die jeweilige Drehwinkelposition des Mitnahmeteils 50 oder 150 bezüglich des Trägers 38 nicht ankommt. Das riemenartige Mitnahmeteil 50 oder 150 kann also sehr einfach am Träger 38 montiert werden, indem nämlich die zapfenartigen Rastvorsprünge 52 in die Rastaufnahmen 48 eingerastet oder eingedrückt werden. Ein Vorteil ist dabei auch, dass ein verschlissenes Mitnahmeteil 50, 150 sehr leicht gegen ein neues, unverschlissenes Mitnahmeteil 50 oder 150 ausgetauscht werden kann. Eine aufwändige Demontage oder anschließende Montage des gesamten Mitnehmers 35 oder 135 ist nicht notwendig.

Das Zentrum 55 eines jeweiligen Mitnahmevorsprungs 51 liegt einem Zentrum 65 der Aufnahmekavität 57 etwa gegenüber, so dass ein maximaler Aufnahmeraum zur Aufnahme des Mitnahmevorsprungs 51 bereitsteht.

An den freien Längsendbereichen der Mitnahmeteile 50 oder 150 sind zweckmäßigerweise 2 Rastvorsprünge 52 nebeneinander angeordnet, was eine optimale Verrastung und somit Festlegung der Längsenden ermöglicht.

## Patentansprüche

1. Anhängekupplung für ein Kraftfahrzeug (90), insbesondere ein Personen-Kraftfahrzeug (90), zum Anhängen eines Anhängers (71) an das Kraftfahrzeug (90), mit einem an dem Kraftfahrzeug (90) befestigbaren Kuppelkörperträger (11) und einer an einem freien Endbereich des Kuppelkörperträgers (11) angeordneten, insbesondere kugelförmigen, Fahrzeug-Kuppelkörper (15) zur Kupplung mit einer Zugkupplung (70) des Anhängers (71), wobei im aneinander angekuppelten Zustand die Zugkupplung (70) und der Kuppelkörper (15) um mindestens eine Drehachse, insbesondere mehrachsig, relativ zueinander verdrehbar gelagert sind und die Zugkupplung (70) an einer Lageroberfläche (16) des Kuppelkörpers (15) gelagert ist, wobei an dem Kuppelkörper (15) ein Mitnehmer (35) beweglich gelagert ist, der mindestens einen vor die Lageroberfläche (16) des Kuppelkörpers (15) vorstehenden Mitnahmevorsprung (51) aufweist und von der Zugkupplung (70) mitnehmbar und relativ zu dem Kuppelkörper (15) bewegbar ist, wobei der Mitnehmer (35) einen Bestandteil einer Sensoranordnung (30) zur Erfassung einer Winkelstellung der Zugkupplung (70) relativ zu dem Kuppelkörperträger (11) bildet, **dadurch gekennzeichnet, dass** an dem Mitnehmer (35) mindestens eine Aufnahmekavität (57) für den mindestens einen Mitnahmevorsprung (51) vorhanden ist, in die der mindestens eine Mitnahmevorsprung (51) durch die Zugkupplung (70) hinein verdrängbar ist, so dass die Zugkupplung (70) an dem Mitnahmevorsprung (51) vorbei beweglich ist, wobei die Aufnahmekavität (57) ein Freivolumen zur Aufnahme mindestens etwa desjenigen Volumens des mindestens einen Mitnahmevorsprungs (51) aufweist, das im nicht durch die Zugkupplung (70) belasteten Zustand des Mitnehmervorsprungs vor die Lageroberfläche (16) vorsteht.

2. Anhängekupplung nach Anspruch 1, **dadurch gekennzeichnet, dass** der mindestens eine Mitnahmevorsprung (51) elastisch ist und/oder an einem Grundkörper des Mitnehmers (35) federnd und/oder elastisch gelagert ist.

3. Anhängekupplung nach Anspruch 1 oder 2, **dadurch gekennzeichnet, dass** der mindestens eine Mitnahmevorsprung (51) nicht elastisch ist, jedoch an einem elastischen Abschnitt des Mitnehmers (35) angeordnet ist, so dass der mindestens eine Mitnahmevorsprung (51) in die Aufnahmekavität (57) hinein verdrängbar ist.

4. Anhängekupplung nach einem der vorhergehenden Ansprüche, **dadurch gekennzeichnet, dass** ein Zentrum (55) des mindestens einen Mitnahmevorsprungs (51) und ein Zentrum (65) der zugeordneten Aufnahmekavität (57) derart hintereinander angeordnet sind oder miteinander fluchten, dass das Zentrum (55) des mindestens einen Mitnahmevorsprungs (51) etwa mittig in die Aufnahmekavität (57) hinein verdrängbar ist.

5. Anhängekupplung nach einem der vorhergehenden Ansprüche, **dadurch gekennzeichnet, dass** der Mitnehmer (35) mehrere Mitnahmevorsprünge aufweist und dass jedem Mitnahmevorsprung (51) eine Aufnahmekavität (57) zugeordnet ist, in die der Mitnahmevorsprung (51) durch die Zugkupplung (70) hinein verdrängbar ist.

6. Anhängekupplung nach einem der vorhergehenden Ansprüche, **dadurch gekennzeichnet, dass** der Mitnehmer (35) mindestens zwei in einem Winkelabstand an seinem Außenumfang angeordnete Mitnahmevorsprünge aufweist.

7. Anhängekupplung nach einem der vorhergehenden Ansprüche, **dadurch gekennzeichnet, dass** an dem mindestens einen Mitnahmevorsprung (51) eine Aufgleitkontur (54) für die Zugkupplung (70), insbesondere einen Haltebacken (75) der Zugkupplung (70), vorgesehen ist und/oder dass der mindestens eine Mitnahmevorsprung (51) im in die Aufnahmekavität (57) hinein verdrängtem Zustand nicht vor die Lageroberfläche (16) des Kuppelkörpers (15) vorsteht.

8. Anhängekupplung nach einem der vorhergehenden Ansprüche, **dadurch gekennzeichnet, dass** der Kuppelkörper (15) einen Außendurchmesser von ca. 50 mm aufweist und der mindestens eine Mitnahmevorsprung (51) oder eine Anordnung mehrerer Mitnahmevorsprünge (51) des Mitnehmers (35) eine den Außendurchmesser des Kuppelkörpers (15) Umhüllende (56) mit einem Durchmesser von 54 mm nicht durchdringen.

9. Anhängekupplung nach einem der vorhergehenden Ansprüche, **dadurch gekennzeichnet, dass** eine Elastizität des mindestens einen Mitnahmevorsprungs (51) derart ausgestaltet ist, dass er durch eine Anpresskraft von maximal 116 Newton, vorzugsweise maximal 110 Newton, im wesentlichen vollständig in die Aufnahmekavität (57) hinein verdrängbar ist.

10. Anhängekupplung nach einem der vorhergehenden Ansprüche, **dadurch gekennzeichnet, dass** der Mitnehmer (35) einen in einer Lageraufnahme (22) des Kuppelkörpers (15) gelagerten Träger (38) und mindestens ein an dem Träger angeordnetes Mitnahmeteil (50) aufweist, wobei das mindestens eine Mitnahmeteil (50) zur Drehmitnahme durch die Zugkupplung (70) vorgesehen ist und den mindestens einen Mitnahmevorsprung (51) aufweist.

11. Anhängekupplung nach Anspruch 10, **dadurch gekennzeichnet, dass** der Träger (38) und das mindestens eine Mitnahmeteil (50) einstückig sind oder dass das Mitnahmeteil (50) lösbar an dem Träger (38) angeordnet ist.

12. Anhängekupplung nach Anspruch 10 oder 11, **dadurch gekennzeichnet, dass** der Träger (38) und das mindestens eine Mitnahmeteil (50) anhand einer Rastverbindung und/oder einer Hakenverbindung miteinander verbunden sind, wobei vorteilhaft mindestens eine Rastaufnahme (48) oder eine Hakenaufnahme des Trägers (38) die Aufnahmekavität (57) bildet oder aufweist, und/oder dass das mindestens eine Mitnahmeteil (50) einen lang gestreckten, biegeflexiblen Körper, insbesondere einen Zahnriemen, bildet oder aufweist, der an die Außenkontur des Trägers (38) anpassbar ist und mit dem bereits am Kuppelkörper (15) montierten Träger (38) lösbar verbindbar ist.

13. Anhängekupplung nach einem der Ansprüche 10 bis 12, **dadurch gekennzeichnet, dass** der Träger (38) mindestens eine Aufnahme, insbesondere eine Steckaufnahme, für einen Endbereich des mindestens einen Mitnahmeteils (50) aufweist derart, dass der Endbereich des mindestens einen Mitnahmeteils (50) bei Gebrauch der Anhängekupplung (10) nicht in Kontakt mit der Zugkupplung (70) des Anhängers (71) gelangt, und/oder dass der Träger (38) aus einem härteren Material als das mindestens eine Mitnahmeteil (50) besteht und/oder eine gehärtete Lagerfläche oder eine gegenüber dem mindestens einen Mitnahmeteil (50) härtere Beschichtung zum lagernden Kontakt mit der Lageraufnahme (22) des Kuppelkörpers (15) aufweist.

14. Anhängekupplung nach einem der vorhergehenden Ansprüche, **dadurch gekennzeichnet, dass** der Mitnehmer (35), insbesondere der Träger (38), mindestens eine Sensorteilaufnahme zur Aufnahme eines Sensorgebers oder eines Sensorelements aufweist.

15. Anhängekupplung nach einem der vorhergehenden Ansprüche, **dadurch gekennzeichnet, dass** der Kuppelkörper (15) im Wesentlichen kugelförmig ist und die Zugkupplung (70) eine Kupplungsaufnahme (72) aufweist und/oder dass der Mitnehmer (35) zumindest im Wesentlichen ringförmig ist.

## Claims

1. Trailer coupling for a motor vehicle (90), in particular a car (90), for attaching a trailer (71) to the motor vehicle (90), with a coupling body support (11) which may be attached to the motor vehicle (90) and with a vehicle coupling body (15), in particular spherical, fitted on a free end section of the coupling body support (11), for coupling to a towing coupling (16) of the trailer (71) wherein, when coupled together, the towing coupling (70) and the coupling body (15) are rotatably mounted relative to one another around at least one axis of rotation, in particular multi-axis, and the towing coupling (70) is mounted on a bearing surface (16) of the coupling body (15), wherein there is movably mounted on the coupling body (15) a driver (35) which has at least one driving projection (51) protruding beyond the bearing surface (16) of the coupling body (15) and drivable by the towing coupling (70) and movable relative to the coupling body (15), wherein the driver (35) forms part of a sensor array (30) to detect an angular position of the towing coupling (70) relative to the coupling body support (11), **characterised in that** the driver (35) has at least one seating cavity (57) for the driving projection or projections (51), into which the driving projection or projections (51) may be displaced by the towing coupling (70), so that the towing coupling (70) may be moved past the driving projection (51), wherein the seating cavity (57) has a free volume to accommodate at least roughly that volume of the driving projection or projections (51) which protrudes beyond the bearing surface (16) when the driving projection is not under load from the towing coupling (70).

2. Trailer coupling according to claim 1, **characterised in that** the driving projection or projections (51) is or are elastic, and/or sprung or elastically mounted on a base body of the driver (35).

3. Trailer coupling according to claim 1 or 2, **characterised in that** the driving projection or projections (51) is or are inelastic, but is or are located on an elastic section of the driver (35), so that the driving projection or projections (51) may be displaced into the seating cavity (57).

4. Trailer coupling according to any of the preceding claims, **characterised in that** a centre (55) of the driving projection or projections (51) and a centre (65) of the assigned seating cavity (57) are so arranged consecutively or flush with one another that the centre (55) of the driving projection or projections (51) may be displaced roughly centrally into the seating cavity (57).

5. Trailer coupling according to any of the preceding claims, **characterised in that** the driver (35) has several driving projections and that each driving projection (51) is assigned a seating cavity (57) into which the driving projection (51) may be displaced by the towing coupling (70).

6. Trailer coupling according to any of the preceding claims, **characterised in that** the driver (35) has at least two driving projections, arranged with angular clearance on its outer periphery.

7. Trailer coupling according to any of the preceding claims, **characterised in that** there is provided on the driving projection or projections (51) a slide-on contour (54) for the towing coupling (70), in particular a holding jaw (75) of the towing coupling (70), and/or that the driving projection or projections (51) does or do not protrude beyond the bearing surface (16) of the coupling body (15) when displaced into the seating cavity (57).

8. Trailer coupling according to any of the preceding claims, **characterised in that** the coupling body (15) has an outside diameter of approx. 50 mm, and the driving projection or projections (51) or an arrangement of several driving projections (51) of the driver (35) does or do not penetrate an envelope (56) for the outside diameter of the coupling body (15) with a diameter of 54 mm.

9. Trailer coupling according to any of the preceding claims, **characterised in that** an elasticity of the driving projection or projections (51) is so designed that it or they may be displaced substantially completely into the seating cavity (57) by a contact force of maximum 116 Newton, preferably 110 Newton.

10. Trailer coupling according to any of the preceding claims, **characterised in that** the driver (35) has a member (38) mounted in a bearing seating (22) of the coupling body (15) and at least one driving element (50) mounted on the member, wherein the driving element or elements (50) is or are provided for rotary driving by the towing coupling (70) and has the driving projection or projections (51).

11. Trailer coupling according to claim 10, **characterised in that** the member (38) and the driving element or elements (50) are single-piece or that the driving element (50) is mounted releasably on the member (38).

12. Trailer coupling according to claim 10 or 11, **characterised in that** that the member (38) and the driving element or elements (50) are connected to one another by means of a latching connection and/or a hook connection, wherein advantageously at least one latching location (48) or a hook location of the member (38) forms or has the seating cavity (57), and/or that the driving element or elements (50) forms/form or has/have a long elongated flexible body, in particular a toothed belt, which may be matched to the external contour of the member (38) and may be releasably connected to the member (38) already mounted on the coupling body (15).

13. Trailer coupling according to any of claims 10 to 12, **characterised in that** the member (38) has at least one location, in particular a plug-in socket, for an end section of the driving element or elements (50), such that the end section of the driving element or elements (50), when the trailer coupling (10) is in use, does not come into contact with the towing coupling (70) of the trailer (71), and/or that the member (38) is made of a harder material than the driving element or elements (50) and/or has a hardened bearing surface or a harder coating than the driving element or elements (50) for bearing contact with the bearing seating (22) of the coupling body (15).

14. Trailer coupling according to any of the preceding claims, **characterised in that** the driver (35), in particular the member (38), has at least one sensor element holder to hold a sensor pickup or a sensor element.

15. Trailer coupling according to any of the preceding claims, **characterised in that** the coupling body (15) is substantially spherical and the towing coupling (70) has a coupling seating and/or that the driver (35) is at least substantially annular.

## Revendications

1. Attelage de remorque pour un véhicule automobile (90), en particulier un véhicule de tourisme (90), servant à atteler une remorque (71) au véhicule automobile (90), avec un support de corps de couplage (11) pouvant être fixé au niveau du véhicule automobile (90) et un corps de couplage de véhicule (15), en particulier en forme de boule, disposé au niveau d'une zone d'extrémité libre du support de corps de couplage (11), destiné à l'attelage à un attelage de traction (70) de la remorque (71), dans lequel dans l'état accouplé l'un au niveau de l'autre, l'attelage de traction (70) et le corps de couplage (15) sont montés de manière à pouvoir tourner l'un par rapport à l'autre autour d'au moins un axe de rotation, en particulier de manière multiaxiale et l'attelage de traction (70) est monté au niveau d'une surface de palier (16) du corps de couplage (15), dans lequel est monté de manière mobile au niveau du corps de couplage (15) un entraîneur (35), qui présente au moins une partie faisant saillie d'entraînement (51) faisant saillie devant la surface de palier (16) du corps de couplage (15) et qui peut être entraîné par l'attelage de traction (70) et peut être déplacé par rapport au corps de couplage (15), dans lequel l'entraîneur (35) constitue un élément constitutif d'un ensemble capteur (30) servant à détecter une position angulaire de l'attelage de traction (70) par rapport au support de corps de couplage (11), **caractérisé en ce qu'**est présente au niveau de l'entraîneur (35) au moins une cavité de logement (57) pour l'au moins une partie faisant saillie d'entraînement (51), à l'intérieur de laquelle l'au moins une partie faisant saillie d'entraînement (51) peut être repoussée par l'attelage de traction (70) de sorte que l'attelage de traction (70) est mobile le long de la partie faisant saillie d'entraînement (51), dans lequel la cavité de logement (57) présente un volume libre servant à loger au moins à peu près ledit volume de l'au moins une partie faisant saillie d'entraînement (51), qui fait saillie devant la surface de palier (16) dans l'état, non contraint par l'attelage de traction (70), de la partie faisant saillie d'entraîneur.

2. Attelage de remorque selon la revendication 1, **caractérisé en ce que** l'au moins une partie faisant saillie d'entraînement (51) est élastique, et/ou est montée sur ressorts et/ou de manière élastique au niveau d'un corps de base de l'entraîneur (35).

3. Attelage de remorque selon la revendication 1 ou 2, **caractérisé en ce que** l'au moins une partie faisant saillie d'entraînement (51) n'est pas électrique, est disposée toutefois au niveau d'une section élastique de l'entraîneur (35) si bien que l'au moins une partie faisant saillie d'entraînement (51) peut être poussée à l'intérieur de la cavité de logement (57).

4. Attelage de remorque selon l'une quelconque des revendications précédentes, **caractérisé en ce qu'**un centre (55) de l'au moins une partie faisant saillie d'entraînement (51) et un centre (65) de la cavité de logement (57) associée sont disposés l'un derrière l'autre de telle manière ou sont en affleurement l'un avec l'autre de telle manière que le centre (55) de l'au moins une partie faisant saillie d'entraînement (51) peut être poussé à peu près au centre à l'intérieur de la cavité de logement (57).

5. Attelage de remorque selon l'une quelconque des revendications précédentes, **caractérisé en ce que** l'entraîneur (35) présente plusieurs parties faisant saillie d'entraînement, et qu'est associée à chaque partie faisant saillie d'entraînement (51) une cavité de logement (57), à l'intérieur de laquelle la partie faisant saillie d'entraînement (51) peut être poussée par l'attelage de traction (70).

6. Attelage de remorque selon l'une quelconque des revendications précédentes, **caractérisé en ce que** l'entraîneur (35) présente au moins deux parties faisant saillie d'entraînement disposées au niveau de sa périphérie extérieure à une distance angulaire.

7. Attelage de remorque selon l'une quelconque des revendications précédentes, **caractérisé en ce qu'**un contour de glissement (54) pour l'attelage de remorque (70), en particulier une mâchoire de maintien (75) de l'attelage de traction (70) est prévu au niveau de l'au moins une partie faisant saillie d'entraînement (51), et/ou que l'au moins une partie faisant saillie d'entraînement (51) fait saillie ne fait pas saillie devant la surface de palier (16) du corps de couplage (15) dans l'état poussé à l'intérieur de la cavité de logement (57).

8. Attelage de remorque selon l'une quelconque des revendications précédentes, **caractérisé en ce que** le corps de couplage (15) présente un diamètre extérieur d'environ 50 mm, et l'au moins une partie faisant saillie d'entraînement (51) ou un ensemble de plusieurs parties faisant saillie d'entraînement (51) de l'entraîneur (35) ne traversent pas une enveloppe (56), enveloppant le diamètre extérieur du corps de couplage (15), avec un diamètre de 54 mm.

9. Attelage de remorque selon l'une quelconque des revendications précédentes, **caractérisé en ce qu'**une élasticité de l'au moins une partie faisant saillie d'entraînement (51) est configurée de telle manière qu'elle peut être poussée sensiblement en totalité dans la cavité de logement (57) par une force de compression de 116 newtons au maximum, de préférence de 110 newtons au maximum.

10. Attelage de remorque selon l'une quelconque des revendications précédentes, **caractérisé en ce que** l'entraîneur (35) présente un support (38) monté dans un logement de palier (22) du corps de couplage (15) et au moins une partie d'entraînement (50) disposée au niveau du support, dans lequel l'au moins une partie d'entraînement (50) est prévue pour l'entraînement en rotation par l'attelage de traction (70) et présente l'au moins une partie faisant saillie d'entraînement (51).

11. Attelage de remorque selon la revendication 10, **caractérisé en ce que** le support (38) et l'au moins une partie d'entraînement (50) sont d'un seul tenant, ou que la partie d'entraînement (50) est disposée de manière amovible au niveau du support (38).

12. Attelage de remorque selon la revendication 10 ou 11, **caractérisé en ce que** le support (38) et l'au moins une partie d'entraînement (50) sont reliés l'un à l'autre à l'aide d'une liaison par enclenchement et/ou d'une liaison par crochets, dans lequel de manière avantageuse au moins un logement d'enclenchement (48) ou un logement de crochet du support (38) constitue ou présente la cavité de logement (57), et/ou que l'au moins une partie d'entraînement (50) constitue ou présente un corps flexible, étiré en longueur, en particulier une courroie dentée, qui peut être adapté au contour extérieur du support (38) et peut être relié de manière amovible au support (38) déjà monté au niveau du corps de couplage (15).

13. Attelage de remorque selon l'une quelconque des revendications 10 à 12, **caractérisé en ce que** le support (38) présente au moins un logement, en particulier un logement d'enfichage, pour une zone d'extrémité de l'au moins une partie d'entraînement (50) de telle manière que la zone d'extrémité de l'au moins une partie d'entraînement (50) ne parvient pas en contact avec l'attelage de traction (70) de la remorque (71) lors de l'utilisation de l'attelage de remorque (10), et/ou que le support (38) est constitué d'un matériau plus dur que l'au moins une partie d'entraînement (50) et/ou présente une surface de palier durcie ou un revêtement plus dur par rapport à l'au moins une partie d'entraînement (50) destinée ou destiné à venir en contact de montage avec le logement de palier (22) du corps de couplage (15).

14. Attelage de remorque selon l'une quelconque des revendications précédentes, **caractérisé en ce que** l'entraîneur (35), en particulier le support (38), présente au moins un logement partiel de capteur servant à loger une sonde de capteur ou un élément de capteur.

15. Attelage de remorque selon l'une quelconque des revendications précédentes, **caractérisé en ce que** le corps de couplage (15) est sensiblement de forme sphérique, et l'attelage de traction (70) présente un logement d'attelage (72), et/ou que l'entraîneur (35) est au moins sensiblement de forme annulaire.
